(19) Europäisches Patentamt
European Patent Office
Office européen des brevets

(11) **EP 3 213 953 B1**

(12) **EUROPEAN PATENT SPECIFICATION**

(45) Date of publication and mention
of the grant of the patent:
**20.04.2022 Bulletin 2022/16**

(21) Application number: **17154644.3**

(22) Date of filing: **03.02.2017**

(51) International Patent Classification (IPC):
**B60L 50/10** (2019.01)          **B60L 50/50** (2019.01)

(52) Cooperative Patent Classification (CPC):
**B60L 58/12; B60L 50/10; B60L 50/15; B60L 50/51;**
B60L 2200/26; B60L 2210/30; B60L 2210/40;
B60L 2240/529; B60L 2240/549; B60L 2260/165;
Y02T 10/62; Y02T 10/70; Y02T 10/72

(54) **HYBRID ELECTRIC LOCOMOTIVE**

HYBRIDE ELEKTROLOKOMOTIVE

LOCOMOTIVE ÉLECTRIQUE HYBRIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2016 JP 2016042211**

(43) Date of publication of application:
**06.09.2017 Bulletin 2017/36**

(73) Proprietor: **Kabushiki Kaisha Toshiba
Minato-ku,
Tokyo 105-8001 (JP)**

(72) Inventors:
• **KUWANO, Yuuki
Tokyo, 105-8001 (JP)**
• **KIKKAWA, Kenichi
Tokyo, 105-8001 (JP)**
• **KATO, Jin
Tokyo, 105-8001 (JP)**
• **KONDO, Atsumi
Tokyo, 105-8001 (JP)**

(74) Representative: **AWA Sweden AB
Junkersgatan 1
582 35 Linköping (SE)**

(56) References cited:
EP-A1- 2 572 951          EP-A2- 2 106 954
CN-A- 103 481 787         US-A- 5 945 808
US-A1- 2012 062 027       US-A1- 2013 200 845
US-A1- 2014 008 977

**Description**

FIELD

Embodiments described herein relate generally to a hybrid electric locomotive.

BACKGROUND

Conventionally, there has been known a hybrid vehicle including a plurality of power sources such as an internal combustion engine, a battery and the like.

In this conventional technique, for example, the sum of electrical power output from the internal combustion engine through a converter and electrical power output from the battery is supplied to an inverter that drives a motor or other components. The size of the conventional converter has thus been large so as to handle a large current applied when the electrical power output from the battery is small, for example, at low temperature.

For this reason, it has been desired to achieve reduction in the size of the conventional converter.

Document US5945808 discloses a controller for a hybrid electric vehicle for regulating operation of an engine and a generator based on output signals of sensors and maximum power generation characteristics.

Document EP2572951 discloses a vehicle comprising an electric power generation mechanism to generate charging power for an electrical storage apparatus during vehicle travel.

BRIEF DESCRIPTION OF THE DRAWINGS

FIG. 1 is an exemplary block diagram illustrating the schematic configuration of a hybrid electric locomotive according to an embodiment;

FIG. 2 is an exemplary diagram illustrating a current characteristic of a battery at room temperature in the embodiment;

FIG. 3 is an enlarged view illustrating part of the diagram in FIG. 2, in the embodiment;

FIG. 4 is an exemplary diagram illustrating a relationship between an open voltage of the battery and a state of charge (SOC) thereof, in the embodiment;

FIG. 5 is an exemplary diagram illustrating a current characteristic of the battery at low temperature in the embodiment; and

FIG. 6 is an exemplary block diagram illustrating control executed by a controller in the embodiment.

DETAILED DESCRIPTION

In general, a hybrid electric locomotive according to one embodiment includes: an internal combustion engine; a dynamo; a converter; an inverter; a direct current link; a battery; a first map; and a controller. The dynamo is connected with the internal combustion engine and capable of converting power of the internal combustion engine into alternating current power. The converter is connected with the dynamo and capable of converting the alternating current power of the dynamo into direct current power. The inverter is capable of converting the direct current power into alternating current power. The direct current link connects the converter and the inverter. The battery is electrically connected with the direct current link. The first map stores therein a correspondence relationship between an upper limit of output power of the battery and a temperature and a state of charge (SOC) of the battery. The controller controls the internal combustion engine and the dynamo in accordance with the temperature and the SOC of the battery so that the output power of the battery is not higher than the upper limit stored in the first map.

Embodiments will be described below with reference to the accompanying drawings.

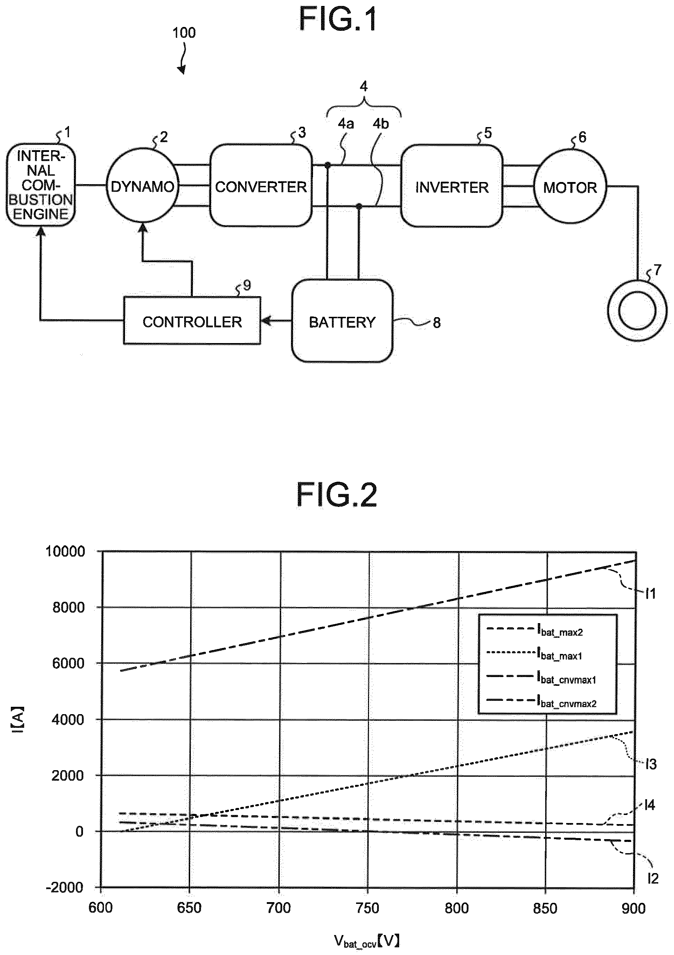

FIG. 1 is an exemplary block diagram illustrating the schematic configuration of a hybrid electric locomotive 100 according to an embodiment. As illustrated in FIG. 1, the hybrid electric locomotive 100 includes: an internal combustion engine 1; a dynamo 2; a converter 3; a direct current link 4; an inverter 5; a motor 6; a wheel 7; a battery 8; and a controller 9.

The internal combustion engine 1 is a machine (engine) that converts thermal energy into mechanical energy, and is a machine that generates power by combusting fuel inside. The dynamo 2 converts the power generated by the internal combustion engine 1 into electric energy. The following describes an example in which the electric energy output from the dynamo 2 is alternating current power.

The converter 3 converts the alternating current power output from the dynamo 2 into direct current power, and outputs the direct current power obtained through the conversion to the direct current link 4. The direct current link 4 includes a p-type link 4a and a n-type link 4b, and is provided to connect an output-side of the converter 3 and an input-side of the inverter 5. The inverter 5 converts the direct current power input through the direct current link 4 into (three-phase) alternating current power, and outputs the alternating current power obtained through the conversion to the motor 6. The motor 6 drives the wheel 7 based on the alternating current power supplied from the inverter 5.

The battery 8 is, for example, a secondary battery capable of charging and discharging. The battery 8 is connected with the direct current link 4, and performs a charging operation to receive the direct current power supplied from the direct current link 4, and a discharging operation to supply direct current power to the direct current link 4. The controller 9 monitors the state (including the temperature and the SOC) of the battery 8, and controls the internal combustion engine 1 and the dynamo 2 in accordance with the result of the monitoring.

Meanwhile, in the above-described electrical power system of the hybrid electric locomotive 100, a relationship among a maximum power $P_{inv\_max}$ that can be input to the inverter 5, a maximum power $P_{cnv\_max}$ that the converter 3 can output, and a maximum power $P_{bat\_max}$ that the battery 8 can output is given by Expression (1) below.

$$P_{inv\_max} = P_{bat\_max} + P_{cnv\_max} \tag{1}$$

The battery 8 has an output characteristic (internal resistance characteristic) that largely changes with temperature. For example, when the temperature of the battery 8 is low, the battery 8 has a large internal resistance and a small $P_{bat\_max}$. In order to maintain a certain $P_{inv\_max}$ when the temperature of the battery 8 is low, for example, at start of the hybrid electric locomotive 100, $P_{cnv\_max}$ needs to be increased by an amount corresponding to a reduction in $P_{bat\_max}$. However, in order to have a large $P_{cnv\_max}$, the converter 3 needs to be designed to handle a large current, thereby leading to an increase in the size of the converter 3.

The output characteristic of the battery 8 largely changes also with the SOC. Specifically, since the SOC corresponds to a remaining charge amount of the battery 8, $P_{bat\_max}$ changes not only with the temperature of the battery 8 but also with the amount of the SOC.

For this reason, in the embodiment, $P_{bat\_max}$ is calculated in accordance with the temperature and the SOC of the battery 8 based on a maximum value of current that the converter 3 can output and the output characteristic of the battery 8, and maximum use of the power of the battery 8 up to this $P_{bat\_max}$ leads to reduction in the current of the converter 3 and hence in the size of the converter 3. In other words, the controller 9 according to the embodiment controls the output of the converter 3 in accordance with the temperature and the SOC of the battery 8 so that the output of the battery 8 is not larger than the predetermined upper limit $P_{bat\_max}$ calculated based on the maximum value of current that the converter 3 can output and the output characteristic of the battery 8.

The following describes a method of calculating $P_{bat\_max}$ in detail with reference to expressions.

When $I_{cnv\_max}$ represents the maximum current of the converter 3, $V_{bat}$ represents the voltage of the battery 8, $\eta$ represents the efficiency of the converter 3, and $\cos\theta$ represents a phase factor, the maximum power $P_{cnv\_max}$ of the converter 3 is given by Expression (2) below.

$$P_{cnv\_max} = \sqrt{3}\left(\frac{\sqrt{6}}{\pi} V_{bat}\right) I_{cnv\_max} \times \eta \times \cos\theta \tag{2}$$

When $V_{bat\_ocv}$, $R_{bat}$, and $I_{bat\_cnvmax}$ respectively represent the open voltage, the internal resistance, and the current of the battery 8 when the current of the converter 3 is at the above-described $I_{cnv\_max}$, the above-described Vbat is given by Expression (3) below.

$$V_{bat} = V_{bat\_ocv} - (R_{bat} \times I_{bat\_cnvmax}) \tag{3}$$

Substituting Expression (3) into Expression (2) and simplifying the result of the substitution using $\alpha$ given by Expression (4) below derives Expression (5) below.

$$\sqrt{3}\left(\frac{\sqrt{6}}{\pi}\right) I_{cnv\_max} \times \eta \times \cos\theta = \alpha \tag{4}$$

$$P_{cnv\_max} = \alpha(V_{bat\_ocv} - (R_{bat} \times I_{bat\_cnvmax})) \tag{5}$$

The above-described $P_{bat\_max}$ is given by Expression (6) below using Expression (3).

$$P_{bat\_max} = (V_{bat\_ocv} - (R_{bat} \times I_{bat\_cnvmax})) \times I_{bat\_cnvmax} \qquad (6)$$

Substituting Expressions (5) and (6) into Expression (1) and rewriting the result of the substitution derives Expression (7) below.

$$R_{bat} \times I_{bat\_cnvmax}^2 + (\alpha \times R_{bat} - V_{bat\_ocv}) \times I_{bat\_cnvmax} + P_{inv\_max} -$$

$$\alpha \times V_{bat\_ocv} = 0 \qquad (7)$$

Solving Expression (7) as a quadratic equation of $I_{bat\_cnvmax}$ obtains Expression (8) below that gives the current $I_{bat\_cnvmax}$ of the battery 8 in view of the maximum current $I_{cnv\_max}$ of the converter 3.

$$I_{bat\_cnvmax} = \frac{-(\alpha R_{bat} - V_{bat\_ocv}) \pm \sqrt{(\alpha R_{bat} - V_{bat\_ocv})^2 - 4R_{bat}(P_{inv\_max} - \alpha V_{bat\_ocv})}}{2R_{bat}}$$

$$(8)$$

When $V_{bat\_min}$ represents the discharge cutoff voltage of the battery 8, the voltage $V_{bat}$ of the battery 8 is required to be larger than $V_{bat\_min}$, and thus a maximum current $I_{bat\_max1}$ of the battery 8 needs to satisfy Expression (9) below.

$$V_{bat\_min} < V_{bat\_ocv} - (R_{bat} \times I_{bat\_max1}) \qquad (9)$$

Expression (9) can be rewritten to derive Expression (10) below that represents a condition to be satisfied by the maximum current $I_{bat\_max1}$ of the battery 8.

$$I_{bat\_max1} < \frac{V_{bat\_ocv} - V_{bat\_min}}{R_{bat}} \qquad (10)$$

When $P_{bat\_max\_sys}$ represents a maximum output of the battery 8 defined on the system, a maximum current $I_{bat\_max2}$ of the battery 8 when the output of the battery 8 is at this $P_{bat\_max\_sys}$ is given by Expression (11) below.

$$(V_{bat\_ocv} - R_{bat} \times I_{bat\_max2}) \times I_{bat\_max2} = P_{bat\_max\_sys} \qquad (11)$$

Rewriting and solving Expression (11) as a quadratic equation of $I_{bat\_max2}$ derives Expression (12) below that gives the maximum current $I_{bat\_max2}$ of the battery 8 in view of the maximum output $P_{bat\_max\_sys}$ of the battery 8 on the system.

$$I_{bat\_max2} = \frac{V_{bat\_ocv} \pm \sqrt{(V_{bat\_ocv})^2 - 4R_{bat}P_{bat\_max\_sys}}}{2R_{bat}} \qquad (12)$$

According to Expression (12), $I_{bat\_max2}$ can take two values corresponding to the positive and negative signs in the expression. However, the system does not require a large current. Thus, in the following, $I_{bat\_max2}$ is considered to take only one of the values given by Expression (12) with the negative sign.

FIG. 2 is an exemplary diagram illustrating a current characteristic of the battery 8 at room temperature in the embodiment. Specifically, FIG. 2 illustrates current characteristics of $I_{bat\_cnvmax}$ given by Expression (8), $I_{bat\_max1}$ given by Expression (10), and $I_{bat\_max2}$ given by Expression (12) plotted against the open voltage $V_{bat\_ocv}$ of the battery 8 when the battery 8 is at room temperature. According to Expression (8), $I_{bat\_cnvmax}$ can take the two values corresponding to the positive and negative signs. Thus, in FIG. 2, $I_{bat\_cnvmax}$ with the positive sign is represented as $I_{bat\_cnvmax1}$, and $I_{bat\_cnvmax}$ with the negative sign is represented as $I_{bat\_cnvmax2}$.

Dashed and single-dotted line 11 in FIG. 2 illustrates the current characteristic of $I_{bat\_cnvmax1}$ when the battery 8 is at room temperature. As illustrated with this line 11, $I_{bat\_cnvmax1}$ increases as $V_{bat\_ocv}$ increases. Dashed and double-dotted line 12 in FIG. 2 illustrates the current characteristic of $I_{bat\_cnvmax2}$ when the battery 8 is at room temperature. As illustrated with this line 12, $I_{bat\_cnvmax2}$ decreases as $V_{bat\_ocv}$ increases. Densely dotted line 13 in FIG. 2 illustrates the current characteristic of $I_{bat\_max1}$ when the battery 8 is at room temperature. As illustrated with this line 13, $I_{bat\_max1}$ increases as $V_{bat\_ocv}$ increases. Sparsely dotted line 14 in FIG. 2 illustrates the current characteristic of $I_{bat\_max2}$ when the battery 8 is at room temperature. As illustrated with this line 14, $I_{bat\_max2}$ decreases as $V_{bat\_ocv}$ increases.

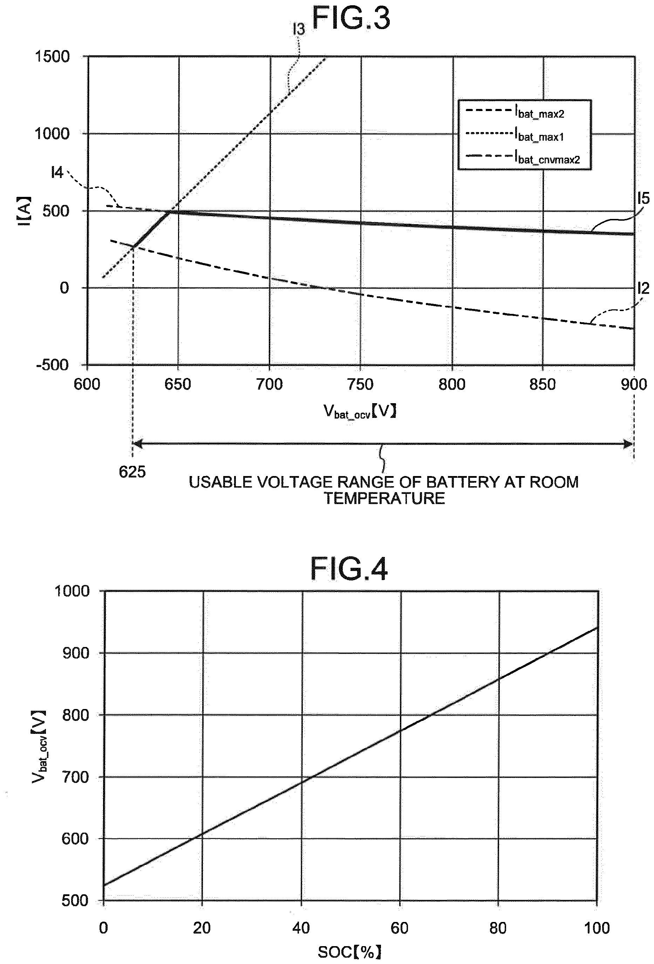

FIG. 3 is an enlarged view illustrating part of the diagram in FIG. 2, in the embodiment. Specifically, FIG. 3 is an enlarged view of FIG. 2 with the ordinate axis in FIG. 2 being scaled up to illustrate the range of -500 to 1500 [A] in detail.

Bold line 15 in FIG. 3 illustrates the current characteristic of the maximum current of the battery 8 at room temperature. As illustrated with this line 15, when the open voltage $V_{bat\_ocv}$ has a value between a voltage (625 [V]) at an intersection of the lines 12 and 13 and a voltage (voltage slightly smaller than 650 [V]) at an intersection of the lines 13 and 14, the maximum current of the battery 8 at room temperature takes a value on the line 13. Further, as illustrated with the line 15, when the open voltage $V_{bat\_ocv}$ takes a value between a voltage (voltage slightly smaller than 650 [V]) at an intersection of the lines 13 and 14 and a predetermined upper limit (900 [V]) in accordance with the maximum output of the battery 8 inclusive, the maximum current of the battery 8 at room temperature takes a value on the line 14.

In other words, in the example in FIG. 3, it can be specified that a usable voltage of the battery 8 at room temperature, which is determined with taken into consideration the maximum current of the converter 3 and the output characteristic of the battery 8, ranges from 625 to 900 [V]. With a voltage range less than 625 [V], however, the current $I_{bat\_cnvmax1}$ as a minimum current to be output from the battery 8, which is determined with taken into consideration the maximum output of the converter 3, exceeds the maximum current $I_{bat\_max1}$ that the battery 8 can output at the discharge cutoff voltage, which would result in an invalid system. As described above, in the example in FIG. 3, the usable voltage of the battery 8 at room temperature has an upper limit of 900 [V] and a lower limit of 625 [V].

FIG. 4 is an exemplary diagram illustrating a relationship between the open voltage and the SOC of the battery 8 in the embodiment. As illustrated in FIG. 4, the open voltage and the SOC of the battery 8 have a proportional relationship. This indicates that the SOC of the battery 8 can be represented as a function of the open voltage of the battery 8. Accordingly, in the embodiment, the range of the SOC to be maintained by the battery 8 at each temperature can be determined by determining the range of the usable voltage of the battery 8 at the temperature by the above-described method.

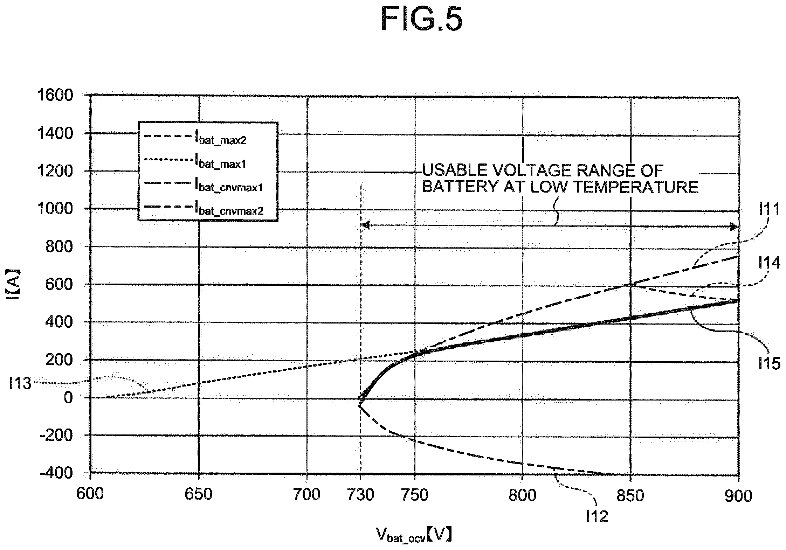

FIG. 5 is an exemplary diagram illustrating the current characteristic of the battery 8 at low temperature in the embodiment. Similarly to FIGS. 2 and 3 described above, FIG. 5 illustrates the current characteristics of $I_{bat\_cnvmax}$ given by Expression (8), $I_{bat\_max1}$ given by Expression (10), and $I_{bat\_max2}$ given by Expression (12) plotted against the open voltage $V_{bat\_ocv}$ of the battery 8.

Dashed and single-dotted line 111 in FIG. 5 illustrates the current characteristic of $I_{bat\_cnvmax1}$ when the battery 8 is at low temperature. As illustrated with this line 111, $I_{bat\_cnvmax1}$ increases as $V_{bat\_ocv}$ increases. Dashed and double-dotted line 112 in FIG. 5 illustrates the current characteristic of $I_{bat\_cnvmax2}$ when the battery 8 is at low temperature. As illustrated with this line 112, $I_{bat\_cnvmax2}$ decreases as $V_{bat\_ocv}$ increases. Densely dotted line 113 in FIG. 5 illustrates the current characteristic of $I_{bat\_max1}$ when the battery 8 is at low temperature. As illustrated with this line 113, $I_{bat\_max1}$ increases as $V_{bat\_ocv}$ increases. Sparsely dotted line 114 in FIG. 4 illustrates the current characteristic of $I_{bat\_max2}$ when the battery 8 is at low temperature. As illustrated with this line 114, $I_{bat\_max2}$ decreases as $V_{bat\_ocv}$ increases.

Bold line 115 in FIG. 5 illustrates the current characteristic of the maximum current of the battery 8 at low temperature. As illustrated with this line 115, when the open voltage $V_{bat\_ocv}$ takes a value between a voltage (730 [V]) at an intersection of the lines 111 and 112 and a voltage (voltage slightly larger than 750 [V]) at an intersection of the lines 111 and 113, the maximum current of the battery 8 at low temperature takes a value on the line 111. Further, as illustrated with the 115, when the open voltage $V_{bat\_ocv}$ takes a value between a voltage (voltage slightly larger than 750 [V]) at an intersection of the lines l11 and l13 and a predetermined upper limit (900 [V]) in accordance with the maximum output of the battery 8 inclusive, the maximum current of the battery 8 at low temperature takes a value on the 113.

In other words, in the example in FIG. 5, it can be specified that a usable voltage of the battery 8 at low temperature, which is determined with taken into consideration the maximum current of the converter 3 and the output characteristic of the battery 8, ranges from 730 to 900 [V]. Thus, in the example in FIG. 5, the usable voltage of the battery 8 at room temperature has an upper limit of 900 [V] and a lower limit of 730 [V].

In the embodiment, the range of the usable voltage of the battery 8 at each temperature is calculated by the above-described methods, and the electrical power system of the hybrid electric locomotive 100 is controlled based on this calculated voltage range.

Specifically, in the embodiment, a correspondence relationship, which exists between the temperature and the SOC of the battery 8 and the upper limit of the voltage range calculated by each above-described method, is mapped and stored in advance as a first map T1 in a table format as illustrated by Table 1 below.

Table 1

| Battery Temperature (°C) \ SOC (%) | 10 | 20 | 30 | 40 | 50 | 60 | 70 | 80 | 90 | 100 |
|---|---|---|---|---|---|---|---|---|---|---|
| 50 | $P_{bat\_max\_11}$ | $P_{bat\_max\_21}$ | $P_{bat\_max\_31}$ | $P_{bat\_max\_41}$ | $P_{bat\_max\_51}$ | $P_{bat\_max\_61}$ | $P_{bat\_max\_71}$ | $P_{bat\_max\_81}$ | $P_{bat\_max\_91}$ | $P_{bat\_max\_A1}$ |
| 40 | $P_{bat\_max\_12}$ | $P_{bat\_max\_22}$ | $P_{bat\_max\_32}$ | $P_{bat\_max\_42}$ | $P_{bat\_max\_52}$ | $P_{bat\_max\_62}$ | $P_{bat\_max\_72}$ | $P_{bat\_max\_82}$ | $P_{bat\_max\_92}$ | $P_{bat\_max\_A2}$ |
| 30 | $P_{bat\_max\_13}$ | $P_{bat\_max\_23}$ | $P_{bat\_max\_33}$ | $P_{bat\_max\_43}$ | $P_{bat\_max\_53}$ | $P_{bat\_max\_63}$ | $P_{bat\_max\_73}$ | $P_{bat\_max\_83}$ | $P_{bat\_max\_93}$ | $P_{bat\_max\_A3}$ |
| 20 | $P_{bat\_max\_14}$ | $P_{bat\_max\_24}$ | $P_{bat\_max\_34}$ | $P_{bat\_max\_44}$ | $P_{bat\_max\_54}$ | $P_{bat\_max\_64}$ | $P_{bat\_max\_74}$ | $P_{bat\_max\_84}$ | $P_{bat\_max\_94}$ | $P_{bat\_max\_A4}$ |
| 10 | $P_{bat\_max\_15}$ | $P_{bat\_max\_25}$ | $P_{bat\_max\_35}$ | $P_{bat\_max\_45}$ | $P_{bat\_max\_55}$ | $P_{bat\_max\_65}$ | $P_{bat\_max\_75}$ | $P_{bat\_max\_85}$ | $P_{bat\_max\_95}$ | $P_{bat\_max\_A5}$ |
| 0 | $P_{bat\_max\_16}$ | $P_{bat\_max\_26}$ | $P_{bat\_max\_36}$ | $P_{bat\_max\_46}$ | $P_{bat\_max\_56}$ | $P_{bat\_max\_66}$ | $P_{bat\_max\_76}$ | $P_{bat\_max\_86}$ | $P_{bat\_max\_96}$ | $P_{bat\_max\_A6}$ |
| -10 | $P_{bat\_max\_17}$ | $P_{bat\_max\_27}$ | $P_{bat\_max\_37}$ | $P_{bat\_max\_47}$ | $P_{bat\_max\_57}$ | $P_{bat\_max\_67}$ | $P_{bat\_max\_77}$ | $P_{bat\_max\_87}$ | $P_{bat\_max\_97}$ | $P_{bat\_max\_A7}$ |
| -20 | $P_{bat\_max\_18}$ | $P_{bat\_max\_28}$ | $P_{bat\_max\_38}$ | $P_{bat\_max\_48}$ | $P_{bat\_max\_58}$ | $P_{bat\_max\_68}$ | $P_{bat\_max\_78}$ | $P_{bat\_max\_88}$ | $P_{bat\_max\_98}$ | $P_{bat\_max\_A8}$ |
| -30 | $P_{bat\_max\_}$ | $P_{bat\_max\_}$ | $P_{bat\_max\_}$ | $P_{bat\_max\_}$ | $P_{bat\_max\_}$ | $P_{bat\_max\_}$ | $P_{bat\_max\_}$ | $P_{bat\_max\_}$ | $P_{bat\_max\_}$ | $P_{bat\_max\_}$ |

In Table 1 above, for example, the state of the battery 8 is categorized into 90 states to define the maximum output $P_{bat\_max\_xx}$ (XX takes values of 11 to 19, 21 to 29, 31 to 39, 41 to 49, 51 to 59, 61 to 69, 71 to 79, 81 to 89, 91 to 99, and A1 to A9) of the battery 8 in each state. Specifically, in the example with Table 1, the temperature of the battery 8 has nine steps from -30 °C to 50 °C at intervals of 10 °C, and the SOC has 10 steps from 10 % to 100 % at intervals of 10 %, so that the state of the battery 8 is categorized into $9 \times 10 = 90$ states. However, Table 1 is merely exemplary, and the number of categories is not limited to 90.

In the example with Table 1, $P_{bat\_max\_XX}$ is defined for all 90 states. Thus, in the embodiment, $P_{bat\_max\_XX}$ is set also for a SOC range other than the SOC ranges corresponding to the voltage ranges calculated by the methods as exemplarily illustrated in FIGS. 3 and 5. For example, in the examples in FIGS. 3 and 5, the lower limit of the range of the usable voltage of the battery 8 is 625 [V] and 730 [V], respectively, but in Table 1, $P_{bat\_max\_XX}$ is set for a region below the SOCs corresponding to these lower limits. $P_{bat\_max\_XX}$ is set for all regions in this manner because traveling of a vehicle needs to be continued by degrading the performance of the vehicle and limiting the output of the battery 8 so as to maintain the product reliability thereof even when the SOC of the battery 8 is below the values corresponding to these lower limits for some reason.

In the embodiment, a correspondence relationship, which exists between the temperature of the battery 8 and the lower limit of the SOC corresponding to the lower limit of the voltage range calculated by each above-described method, is mapped and stored in advance as a second map T2 in a table format as illustrated in Table 2 below.

Table 2

| Temperature of Battery (°C) | Lower Limit of SOC (%) |
|---|---|
| 50 | 30 |
| 45 | 30 |
| 40 | 30 |
| 35 | 30 |
| 30 | 30 |
| 25 | 30 |
| 20 | 30 |
| 15 | 30 |
| 10 | 33 |
| 5 | 36 |
| 0 | 39 |
| -5 | 42 |
| -10 | 45 |
| -15 | 48 |
| -20 | 51 |
| -25 | 54 |
| -30 | 57 |
| -35 | 60 |

In Table 2 above, for example, the temperature of the battery 8 is categorized into 18 temperatures from -35 °C to 50 °C at intervals of 5 °C, and the lower limit of the SOC to be maintained at the battery 8 at each temperature is defined. As described above, the lower limit of the SOC in Table 2 can be calculated from the lower limits of the voltage ranges calculated by the methods exemplarily illustrated in FIGS. 3 and 5 based on the proportional relationship between the open voltage and the SOC of the battery 8 illustrated in FIG. 4. Table 2 is merely exemplary, and the number of categories is not limited to 18.

The controller 9 according to the embodiment can execute power control through maximum use of the battery 8 with taken into consideration the characteristic of the converter 3 (maximum current that the converter 3 can output) by executing control based on the first map T1 and the second map T2 described above.

Specifically, the controller 9 according to the embodiment controls, by using the above-described first map T1, the internal combustion engine 1 and the dynamo 2 in accordance with the temperature and the SOC of the battery 8 so that the output of the battery 8 is not higher than an upper limit calculated based on the specifications of the converter 3 and the battery 8. The controller 9 also controls, by using the above-described second map T2, the internal combustion engine 1 and the dynamo 2 in accordance with the temperature and the SOC of the battery 8 so that the SOC of the battery 8 is not lower than a lower limit calculated based on the specifications of the converter 3 and the battery 8.

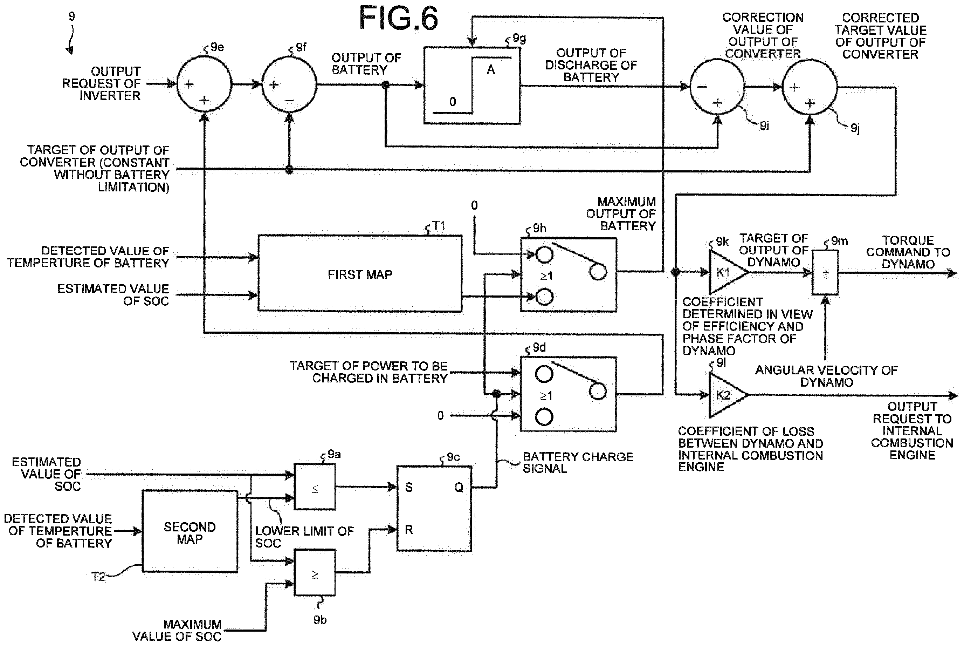

FIG. 6 is an exemplary block diagram illustrating control executed by the controller 9 in the embodiment. The controller 9 includes: comparators 9a and 9b; a flip-flop circuit 9c; a switching circuit 9d; an adder 9e; a subtractor 9f; a limiting circuit 9g; a switching circuit 9h; a subtractor 9i; an adder 9j; multipliers 9k and 9l; and a divider 9m.

As illustrated in FIG. 6, the comparator 9a receives inputting of: a lower limit of the SOC determined based on a detected value of the current temperature of the battery 8 and the second map T2; and an estimated value of the current SOC of the battery 8. The comparator 9b receives inputting of: the estimated value of the SOC; and a maximum value of the SOC that the battery 8 can take. The maximum value of the SOC that is input to the comparator 9b is a value (for example, 80 % or 90 %) set to the system in advance, corresponding to a limiting value of the charge amount of the battery 8. In the embodiment, providing such a limiting value can reduce degradation of the battery 8 due to charging than needed.

Results of comparison at the comparators 9a and 9b are input to the flip-flop circuit 9c. For example, when the estimated value of the SOC is not higher than the lower limit of the SOC, "1" is input to Input S of the flip-flop circuit 9c from the comparator 9a. When the estimated value of the SOC is higher than the lower limit of the SOC, "0" is input to Input S. When the estimated value of the SOC is not lower than the maximum value of the SOC, "1" is input to Input R of the flip-flop circuit 9c from the comparator 9b. When the estimated value of the SOC is lower than the maximum value of the SOC, "0" is input to Input R.

In response to the inputs from the comparators 9a and 9b, the flip-flop circuit 9c outputs a battery charge signal instructing whether to charge the battery 8. For example, when the estimated value of the SOC is not higher than the lower limit of the SOC (in this case, the estimated value of the SOC is lower than the maximum value of the SOC), the battery 8 needs to be charged. Therefore, in this case, the flip-flop circuit 9c outputs a battery charge signal of "1" corresponding to an instruction to charge the battery 8 through Output Q based on "1" to Input S and "0" to Input R. As charging of the battery 8 proceeds, the estimated value of the SOC becomes higher than the lower limit of the SOC. When the estimated value of the SOC is higher than the lower limit of the SOC and is lower than the maximum value of the SOC, the flip-flop circuit 9c maintains the last output and outputs a battery charge signal of "1" through Output Q based on "0" to Input S and "0" to Input R. When the estimated value of the SOC becomes not lower than the maximum value of the SOC, the flip-flop circuit 9c outputs a battery charge signal of "0" corresponding to an instruction not to charge the battery 8 through Output Q based on "0" to Input S and "1" to Input R. Discharging of the battery 8 proceeds while the battery 8 is not charged, and the estimated value of the SOC becomes lower than the maximum value of the SOC. When the estimated value of the SOC is lower than the maximum value of the SOC and is higher than the lower limit of the SOC, the flip-flop circuit 9c maintains the last output and outputs a battery charge signal of "0" through Output Q based on "0" to Input S and "0" to Input R. When the estimated value of the SOC becomes not higher than the lower limit of the SOC, the flip-flop circuit 9c outputs a battery charge signal of "1" through Output Q based on "1" to Input S and "0" to Input R. The above-described operation is repeated to perform charging and discharging of the battery 8 such that the estimated value of the SOC transitions between the lower limit and the maximum value of the SOC.

The switching circuit 9d switches a value to be output to the adder 9e to a value indicating a target of power to be charged in the battery 8, or "0", depending on the battery charge signal input from the flip-flop circuit 9c. Specifically, when the battery charge signal input from the flip-flop circuit 9c corresponds to an instruction to start charging of the battery 8, the switching circuit 9d outputs, to the adder 9e, a target value of power to be charged. In contrast, when the battery 8 does not need to be charged, the switching circuit 9d outputs "0" to the adder 9e.

The adder 9e adds an output request (power necessary for traveling the hybrid electric locomotive 100) from the inverter 5 and an input from the switching circuit 9d. Then, the adder 9e outputs the result of the addition to the subtractor 9f.

The subtractor 9f subtracts a target value of an output of the converter 3 from the result of the addition by the adder 9e. The target value of the output of the converter 3 is constant unless the output of the battery 8 is limited in accordance with the state (temperature or SOC, for example) thereof. The subtractor 9f outputs the result of the subtraction as an output of the battery 8 to the limiting circuit 9g. The subtractor 9f also outputs the result of the subtraction to the subtractor 9i.

The limiting circuit 9g limits the output of the battery that is input from the subtractor 9f based on an input from the switching circuit 9h. Specifically, the switching circuit 9h outputs "0" when the battery 8 needs to be charged. In contrast, the switching circuit 9h outputs, when the battery 8 does not need to be charged, a value indicating the maximum output of the battery 8 determined based on a detected value of the temperature of the battery, the SOC estimated value, and the first map T1. Note that the maximum output of the battery 8 corresponds to the upper limit of the output of the battery 8 determined in view of the characteristic of the converter 3 and the output characteristic of the battery 8.

When the maximum output of the battery 8 is input from the switching circuit 9h, the limiting circuit 9g limits the output of the battery input from the subtractor 9f to be not larger than this maximum output, and outputs this limited value as an output of a discharge of the battery 8 to the subtractor 9i.

The subtractor 9i subtracts the input from the limiting circuit 9g from the input from the subtractor 9f, and outputs the result of the subtraction to the adder 9j as a correction value for correcting the target value of the output of the converter 3. Then, the adder 9j adds the input from the subtractor 9i to the target value of the output of the converter 3 that is also input to the subtractor 9f, and outputs this corrected target value of the output of the converter 3 to the multipliers 9k and 9l.

The multiplier 9k calculates a target value of an output of the dynamo 2 by multiplying the input from the adder 9j by a predetermined coefficient K1 determined in view of the efficiency and phase factor of the dynamo 2, and outputs the result of the calculation to the divider 9m. Then, the divider 9m calculates a torque command to the dynamo 2 by dividing the input from the multiplier 9k by the angular velocity of the dynamo 2, and outputs the result of the calculation to the dynamo 2. The multiplier 9l calculates an output request to the internal combustion engine 1 by multiplying the input from the adder 9j by a coefficient K2 of loss between the dynamo 2 and the internal combustion engine 1, and outputs the result of the calculation to the internal combustion engine 1.

As described above, the hybrid electric locomotive 100 according to the embodiment includes the controller 9 that controls the internal combustion engine 1 and the dynamo 2 in accordance with the temperature and the SOC of the battery 8 so that the output of the battery 8 is not higher than an upper limit calculated based on the maximum value of current that the converter 3 can output and the output characteristic of the battery 8. More specifically, the controller 9 controls the internal combustion engine 1 and the dynamo 2 in accordance with the temperature and the SOC of the battery 8 based on the first map T1 so that the output of the battery 8 is not higher than the upper limit stored in the first map T1. The first map T1 stores therein the correspondence relationship between: the upper limit of the output power of the battery 8, which is determined in view of a case in which the maximum current that the converter 3 can output is output from the converter 3; and the temperature and the SOC of the battery 8. With this configuration, maximum use of the battery 8 up to this upper limit leads to reduction in the current of the converter 3. This achieves reduction in the size of the converter 3.

The above-described effect is particularly significant in the hybrid electric locomotive 100 in which the temperature of the battery 8 is low only at start of the hybrid electric locomotive 100, for example. When enough time has elapsed from the start of the hybrid electric locomotive 100, the battery 8 is warmed up enough to allow the output of the battery 8. Thus, it is not efficient to increase the size of the converter 3 only for the start of the hybrid electric locomotive 100 at which the output of the battery 8 is limited by low temperature. The embodiment eliminates the necessity to provide a large converter that handles a large current only at the start of the hybrid electric locomotive 100, through maximum use of the battery 8 up to the upper limit of the output of the battery 8, which is set in view of the maximum value of current that the converter 3 can output and the output characteristic of the battery 8.

While certain embodiments have been described, these embodiments have been presented by way of example only, and the scope of the invention is only defined by the appended claims.

**Claims**

1.  A hybrid electric locomotive (100) comprising:

    an internal combustion engine (1);
    a dynamo (2) connected with the internal combustion engine (1) and capable of converting power of the internal combustion engine (1) into alternating current power;
    a converter (3) connected with the dynamo (2) and capable of converting the alternating current power of the dynamo (2) into direct current power;
    an inverter (5) capable of converting the direct current power into alternating current power;
    a direct current link (4) connecting the converter (3) and the inverter (5);
    a battery (8) electrically connected with the direct current link (4);
    wherein a maximum power that can be input to the inverter (5) equals to a maximum power that the converter (3) can output, plus a maximum power that the battery (8) can output;
    a first map (T1) storing therein a correspondence relationship between an upper limit of output power of the battery (8) and a temperature and a state of charge of the battery (8),

        **characterised in that**
        the upper limit of output power of the battery (8) is determined based on
        a maximum value of current that the converter (3) can output, and

an output characteristic of the battery (8),

to achieve a maximum use of the battery (8) up to the upper limit of the output power of the battery (8) which leads to a reduction in a current of the converter (3),
wherein the output characteristic of the battery (8) changes with a temperature and a state of charge of the battery (8); and
a controller (9) that controls the internal combustion engine (1) and the dynamo (2) in accordance with the temperature and the state of charge of the battery (8) based on the first map (T1) so that the output power of the battery (8) is not higher than the upper limit stored in the first map (T1).

2. The hybrid electric locomotive (100) according to claim 1, further comprising a second map (T2) storing therein a correspondence relationship between a lower limit of the state of charge of the battery (8) and the temperature of the battery (8),
wherein the controller (9) controls the internal combustion engine (1) and the dynamo (2) in accordance with the state of charge of the battery (8) so that the state of charge of the battery (8) is not lower than the lower limit stored in the second map (T2).

**Patentansprüche**

1. Hybride Elektrolokomotive (100), die umfasst:

einen Verbrennungsmotor (1);
einen Dynamo (2), der mit dem Verbrennungsmotor (1) verbunden ist und in der Lage ist, Leistung des Verbrennungsmotors (1) in Wechselstromleistung umzuwandeln;
einen Wandler (3), der mit dem Dynamo (2) verbunden ist, und in der Lage ist, die Wechselstrom leistung des Dynamos (2) in Gleichstromleistung umzuwandeln;
einen Wechselrichter (5), der in der Lage ist, die Gleichstromleistung in Wechselstrom leistung umzuwandeln;
eine Gleichstromverbindung (4), die den Wandler (3) und den Wechselrichter (5) verbindet;
eine Batterie (8), die elektrisch mit der Gleichstromverbindung (4) verbunden ist;
wobei eine Höchstleistung, die dem Wechselrichter (5) zugeführt werden kann, gleich eine Höchstleistung, die der Wandler (3) abgeben kann, plus eine Höchstleistung ist, die die Batterie (8) abgeben kann;
eine erste Zuordnung (T1), die darin ein Entsprechungsverhältnis zwischen einer Obergrenze der Ausgangsleistung der Batterie (8) und einer Temperatur und einem Ladezustand der Batterie (8) speichert,
**dadurch gekennzeichnet, dass** die Obergrenze der Ausgangsleistung der Batterie (8) bestimmt wird basierend auf:

einem Höchstwert von Strom, den der Wandler (3) abgeben kann, und
einer Ausgangskennlinie der Batterie (8), um eine maximale Nutzung der Batterie (8) bis zur Obergrenze der Ausgangsleistung der Batterie (8) zu erreichen, die zu einer Verminderung in einem Strom des Wandlers (3) führt,
wobei die Ausgangskennlinie der Batterie (8) sich mit einer Temperatur und einem Ladezustand der Batterie (8) ändert; und
eine Steuereinrichtung (9), die den Verbrennungsmotor (1) und den Dynamo (2) gemäß der Temperatur und dem Ladezustand der Batterie (8) basierend auf der ersten Zuordnung (T1) derart steuert, dass die Ausgangsleistung der Batterie (8) nicht höher als die in der ersten Zuordnung (T1) gespeicherte Obergrenze ist.

2. Hybride Elektrolokomotive (100) nach Anspruch 1, die ferner eine zweite Zuordnung (T2) umfasst, die darin ein Entsprechungsverhältnis zwischen einer Untergrenze des Ladezustands der Batterie (8) und der Temperatur der Batterie (8) speichert,
wobei die Steuereinrichtung (9) den Verbrennungsmotor (1) und den Dynamo (2) gemäß dem Ladezustand der Batterie (8) derart steuert, dass der Ladezustand der Batterie (8) nicht niedriger als die in der zweiten Zuordnung (T2) gespeicherte Untergrenze ist.

**Revendications**

1. Locomotive électrique hybride (100) comprenant :

   un moteur à combustion interne (1) ;
   une dynamo (2) reliée au moteur à combustion interne (1) et capable de convertir une énergie du moteur à combustion interne (1) en énergie de courant alternatif ;
   un convertisseur (3) relié à la dynamo (2) et capable de convertir l'énergie de courant alternatif de la dynamo (2) en énergie de courant continu ;
   un onduleur (5) capable de convertir l'énergie de courant continu en énergie de courant alternatif ;
   une liaison de courant continu (4) reliant le convertisseur (3) et l'onduleur (5) ;
   une batterie (8) reliée électriquement à la liaison de courant continu (4) ;
   dans laquelle une énergie maximale qui peut être entrée dans l'onduleur (5) est égale à une énergie maximale que le convertisseur (3) peut délivrer, plus une énergie maximale que la batterie (8) peut délivrer ;
   une première carte (T1) stockant, à l'intérieur de celle-ci, une relation de correspondance entre une limite supérieure d'énergie de sortie de la batterie (8) et une température et un état de charge de la batterie (8),
   **caractérisé en ce que**
   la limite supérieure d'énergie de sortie de la batterie (8) est déterminée sur la base de

   une valeur maximale de courant que le convertisseur (3) peut délivrer, et
   une caractéristique de sortie de la batterie (8),

   pour atteindre une utilisation maximale de la batterie (8) jusqu'à la limite supérieure de l'énergie de sortie de la batterie (8) qui conduit à une réduction d'un courant du convertisseur (3),
   dans laquelle la caractéristique de sortie de la batterie (8) change avec une température et un état de charge de la batterie (8) ; et
   un dispositif de commande (9) qui commande le moteur à combustion interne (1) et la dynamo (2) en fonction de la température et de l'état de charge de la batterie (8) sur la base de la première carte (T1) de sorte que l'énergie de sortie de la batterie (8) ne soit pas supérieure à la limite supérieure stockée dans la première carte (T1).

2. Locomotive électrique hybride (100) selon la revendication 1, comprenant en outre une deuxième carte (T2) stockant, à l'intérieur de celle-ci, une relation de correspondance entre une limite inférieure de l'état de charge de la batterie (8) et la température de la batterie (8),
   dans laquelle le dispositif de commande (9) commande le moteur à combustion interne (1) et la dynamo (2) en fonction de l'état de charge de la batterie (8) de sorte que l'état de charge de la batterie (8) ne soit pas inférieur à la limite inférieure stockée dans la deuxième carte (T2).

# FIG.1

# FIG.2

# FIG.3

USABLE VOLTAGE RANGE OF BATTERY AT ROOM
TEMPERATURE

# FIG.4

# FIG.5

EP 3 213 953 B1

# FIG.6

**EP 3 213 953 B1**